# EUROPÄISCHE PATENTSCHRIFT

(11) **EP 2 992 287 B1**
(45) Veröffentlichungstag und Bekanntmachung des Hinweises auf die Patenterteilung: **21.06.2017**
(21) Anmeldenummer: 14731136.9
(22) Anmeldetag: 29.04.2014
(51) Int. Cl.: F27B 3/08, F27D 11/10, H05B 7/10

(54) **UMSCHMELZOFEN UND KARDANGELENK FÜR DIE ELEKTRODENSTANGENHALTERUNG EINES UMSCHMELZOFENS**
SMELTING FURNACE AND UNIVERSAL JOINT FOR THE ELECTRODE ROD MOUNTING OF A SMELTING FURNACE
FOUR DE FUSION ET JOINT CARDANIQUE POUR LE SUPPORT DE LA BARRE PORTE-ÉLECTRODE D'UN FOUR DE FUSION

(30) Priorität: 30.04.2013 DE 102013007394
(43) Veröffentlichungstag der Anmeldung: 09.03.2016
(73) Patentinhaber: ALD Vacuum Technologies GmbH, 63457 Hanau (DE)
(72) Erfinder: OEHLER, Ralf, 64289 Darmstadt (DE); POPOV, Ivaylo, 63452 Hanau (DE)
(74) Vertreter: Hebing, Norbert
(86) Internationale Anmeldenummer: PCT/DE2014/000220
(87) Internationale Veröffentlichungsnummer: WO 2014/177129

(56) Entgegenhaltungen:
- EP-A1- 0 059 181
- DE-A1- 2 731 227
- DE-B- 1 292 692
- JP-A- H06 275 378
- US-A- 4 185 158
- US-A- 4 420 838
- US-A- 4 569 056

## Beschreibung

Die Erfindung bezieht sich auf einen Umschmelzofen mit einer in einem Grundgestell angeordneten Kokille, einer im Wesentlich senkrecht stehenden und über der Kokille angeordneten Elektrodenstange, an deren zur Kokille gerichteten Ende eine Abschmelzelektrode befestigbar ist, eine allseitig gegenüber dem Grundgestell verschwenkbare Elektrodenstangenhalterung für die Elektrodenstange, um eine an der Elektrodenstange befestigte Abschmelzelektrode in der Kokille möglichst koaxial zur Kokillenmittelachse ausrichten zu können, wobei eine kardanische Lagerung der Elektrodenstangenhalterung gegenüber dem Grundgestell mit zwei sich kreuzenden Kardanachsen vorgesehen ist, und mit einem Gewichtssensor zwischen dem Gestell und der Elektrodenstangenhalterung zur Bestimmung des Gewichts einer an der Elektrodenstange befestigten Abschmelzelektrode.

Derartige Umschmelzöfen werden z. B. zum Umschmelzen genutzt. Solche Umschmelzöfen gibt es in verschiedenen Bauformen. Bei so genannten Vakuumlichtbogenöfen (Vacuum Arc Remelting: VAR) erfolgt das Abschmelzen der Abschmelzelektrode unter Vakuum. Die Kokille befindet sich dazu in einem vakuumdicht geschlossenen Kessel. Die Abschmelzelektrode taucht in die Kokille ein. Durch Anlegen einer Spannung zwischen der Abschmelzelektrode und der Kokille tritt ein Lichtbogen mit einer hohen Stromstärke zwischen dem unteren Ende der Abschmelzelektrode und der sich in der Kokille bildenden Schmelze auf, der die Abschmelzelektrode nach und nach abschmelzen lässt.

Beim Elektroschlacke-Umschmelzverfahren (ESU) wird die Abschmelzelektrode z. B. aus Stahl in das Schlackenbad einer offenen Kokille eingetaucht, welches gleichzeitig als elektrischer Widerstand fungiert. Die Abschmelzelektrode fungiert als stromführende Elektrode und schmilzt ab. Beim Durchgang durch die Schlacke werden Schwefel und nichtmetallische Einschlüsse von der Schlacke aufgenommen und später abgeschieden. Der Vorgang erfolgt unter Luft und nicht in einem Vakuum. Der Stahl erstarrt unter der Schlacke in einer Kupferkokille.

Zur Steuerung dieses Abschmelzvorgangs ist laufend das Gewicht der Abschmelzelektrode zu ermitteln, so dass diese entsprechend ihres Verbrauchs nachgeführt werden kann.

Außerdem benötigt man eine Vorrichtung, um die Abschmelzelektrode möglichst zentral in der Kokille zu positionieren zu können. Bei der Abschmelzelektrode handelt es sich um einen Zylinder, der aber häufig nicht achssymmetrisch ist, sondern eine Krümmung aufweist. Auch wird die Abschmelzelektrode häufig nicht exakt koaxial zur Elektrodenstangenachse an die Elektrodenstange angeschweißt. Dies macht es notwendig, vor Beginn eines Schmelzvorganges die Abschmelzelektrodenhalterung seitlich zu kippen, damit die Abschmelzelektrode möglichst zentral in der Kokille positioniert ist.

In der DE 29 05 752 C3 ist dazu eine Anordnung beschrieben, bei der die Abschmelzelektrodenhalterung an einer höhenverstellbaren Traverse hängend gelagert ist. Auf der Traverse befindet sich eine Bezugsplattform, die über drei Wägezellen, die den Gewichtssensor bilden, an der Traverse abgestützt ist. Eine Tragplatte, die die Elektrodenstange hält, ist um zwei senkrecht zueinander verlaufende Achsen gegenüber der Bezugsplattform verschwenkbar, um die Elektrodenstange ausrichten zu können.

Die EP 0 059 181 A offenbart eine Vorrichtung zur Regelung der Abschmelzrate einer selbstverzehrenden Elektrode in einem Schlackenbad beim Elektroschlackenumschmelzen. Das Gewicht der Elektrode wird durch Kraftmesseinrichtungen bestimmt. Ein konisch ausgeführter Kopf der Elektrodenstange liegt an Kontaktbacken an, die wiederum hängend an einer Hebehydraulik befestigt sind. In der Verbindung zwischen den Kontaktbacken und der Hebehydraulik sind die Kraftmesseinrichtungen angeordnet.

Es wurde auch schon vorgeschlagen, die Bezugsplattform auf dem Deckel eines Kessels einer VAR-Anlage anzuordnen, in dem sich die Kokille befindet, wobei diese gegenüber dem Deckel auf drei Wägezellen ruht.

Auf dieser Bezugsplattform ist ein Träger kardanisch gelagert, auf dem eine Elektrodenstangenhalterung aufgebaut ist. Die kardanische Aufhängung erlaubt, die Halterung in jede Richtung seitlich zu verschwenken. Der Nachteil bei dieser Anordnung ist, dass bei einer seitlichen Neigung der Abschmelzelektrodenhalterung Querkräfte auf die wägezellen ausgeübt werden, die die Messergebnisse verfälschen können. Um dies zu verhindern, wird die Plattform über Querlenker mit dem Gestell des Ofens verbunden, die die Querkräfte abstützen.

Um eine hohe Messgenauigkeit zu erzielen, ist somit ein großer baulicher Aufwand nötig. Des Weiteren ist eine bestimmte Bauhöhe zur Verfügung zu stellen, da eine bestimmte Bauhöhe für den im Allgemeinen aus drei Wägezellen bestehenden Gewichtssensor benötigt wird und erst darüber die kardanische Lagerung der Plattform realisiert werden kann.

Ein weiteres Problem besteht darin, dass die Wägezellen in der Regel frei liegend auf dem Deckel des Ofenkessels oder einem Gestell montiert sind und über Pendelstützen an der kardanischen Aufhängung des Trägers abgestützt sind. Da das von den Wägezellen gelieferte Messergebnis aber stark temperaturempfindlich ist, ist für die Dauer eines Abschmelzvorganges für eine gleich bleibende Temperatur der Wägezellen zu sorgen. Bei frei liegenden Wägezellen ist dies aber kaum zu realisieren, so dass Verfälschungen des Messergebnisses nicht ausgeschlossen sind.

Die Erfindung beruht auf der Aufgabe, eine kompakte kardanische Aufhängung mit einem ggf. aus mehreren Wägezellen bestehenden Gewichtssensor zu schaffen, der darüber hinaus genauere Messergebnisse liefert.

Zur Lösung der Aufgabe sieht die Erfindung vor, dass der Gewichtssensor in einer der Kardanachsen angeordnet ist.

Da erfindungsgemäß der Gewichtssensor Bestandteil der kardanischen Aufhängung wird, wird keine eigene Bauhöhe unterhalb der kardanischen Aufhängung mehr benötigt, so dass auch insgesamt die Bauhöhe des Ofens verringert werden kann.

Die Temperaturverhältnisse in der kardanischen Aufhängung sind wegen deren hohen thermischen Masse gleichmäßiger, so dass die Messergebnisse nicht verfälscht werden.

Vorzugsweise besteht der Gewichtssensor aus mehreren Wägezellen, die in den Achslagern der jeweiligen Kardanachse angeordnet sind.

Üblicherweise wird jede Kardanachse in zwei Lagern drehbar gelagert, so dass zwei Wägezellen ausreichen, um das Gewicht der auf der Plattform ruhenden Abschmelzelektrodenhalterung und der damit verbundenen Elektrodenstange sowie der Abschmelzelektrode selbst zu bestimmen. Die Lager können im einfachsten Fall als einfache Lagerbuchsen ausgelegt sein, die ein Gleitlager für die Wägezellen bilden.

Vorzugsweise werden die Wägezellen in der Kardanachse angeordnet, deren räumliche Lage zum Grundgestell unveränderlich ist, wobei jede Wägezelle jeweils nur eine Messrichtung aufweist, wobei die Ausrichtung der Messrichtung gegenüber dem Grundgestell fixiert ist.

Es werden somit Wägezellen genutzt, die nur in einer Richtung empfindlich sind, die daher senkrecht zu dieser Messrichtung wirkende Kräfte nicht erfassen.

Da die Wägezellen der Kardanachse zugeordnet sind, deren räumlich Lage sich bei einer Kippung der Elektrodenstangenhalterung nicht ändert, ändert sich die Lage der Wägezellen ebenfalls nicht, so dass ihre Messrichtung in Bezug zum Grundgestell stets gleich bleibt, so dass bei einer vertikalen Ausrichtung der Messrichtung das zu bestimmende Gewicht ohne Korrektur unmittelbar erfasst werden kann.

Einen einfachen Aufbau erhält man, wenn jede Wägezelle mit einem Ende in oder an einem Sockel befestigt ist und dass auf dem vom Sockel abstehenden anderen Ende ein Lagerring bzw. eine Lagerbuchse der Achslagerung drehbar gehalten ist.

Dabei kann der Sockel auf dem ggf. gekühlten Deckel eines Kessels zur Aufnahme der Kokille befestigt werden.

Die kardanische Lagerung besteht aus einem Kardanring, in dem und auf dessen Umfang verteilt vier Lagerringe bzw. Lagerbuchsen angeordnet sind, deren Achsen senkrecht zur Kardanringachse verlaufen und von denen jeweils zwei koaxial zueinander angeordnet sind.

Auf diese Weise wird eine relativ flach bauende kardanische Lagerung erzielt.

Bei dieser Anordnung sind die Wägezellen jeweils von einem Lagerring bzw. einer Lagerbuchse umgeben, der/die in dem Kardanring angeordnet ist. Damit wird die Temperatur der Wägezellen, die in dem Kardanring eingebettet sind, im Wesentlichen von der gleich bleibenden Temperatur des Kardanringes bestimmt, der die Wägezellen gegenüber äußeren, die Temperatur verändernden Einflüssen abschirmt, so dass die Messergebnisse nicht durch eine Temperaturänderung verfälscht werden.

Wenn es notwendig ist, kann der Kardanring als Hohlring ausgeführt werden, der mit einer Kühlflüssigkeit versorgt wird, was eine konstante Temperatur der Wägezellen befördert.

Die Erfindung bezieht sich nicht nur auf den Umschmelzofen, sondern auch auf das Kardangelenk an sich, wie dieses in den letzten drei Ansprüchen definiert ist.

Im Folgenden soll anhand eines Ausführungsbeispieles die Erfindung näher erläutert werden. Auf eine gesamte Darstellung des Ofens wurde verzichtet, da dieser im Wesentlichen wie in der oben zitierten DE 101 06 966 C2 aufgebaut ist.

Dazu zeigen:
- Fig. 1: eine perspektivische Darstellung einer kardanisch gelagerten Elektrodenstangenhalterung eines Umschmelzofens, wobei die kardanische Lagerung Wägezellen aufweist,
- Fig. 2: einen Schnitt entlang der Linie A-A gemäß der Fig.1 und
- Fig. 3: einen Schnitt entlang der Linie B-B gemäß der Fig.1.

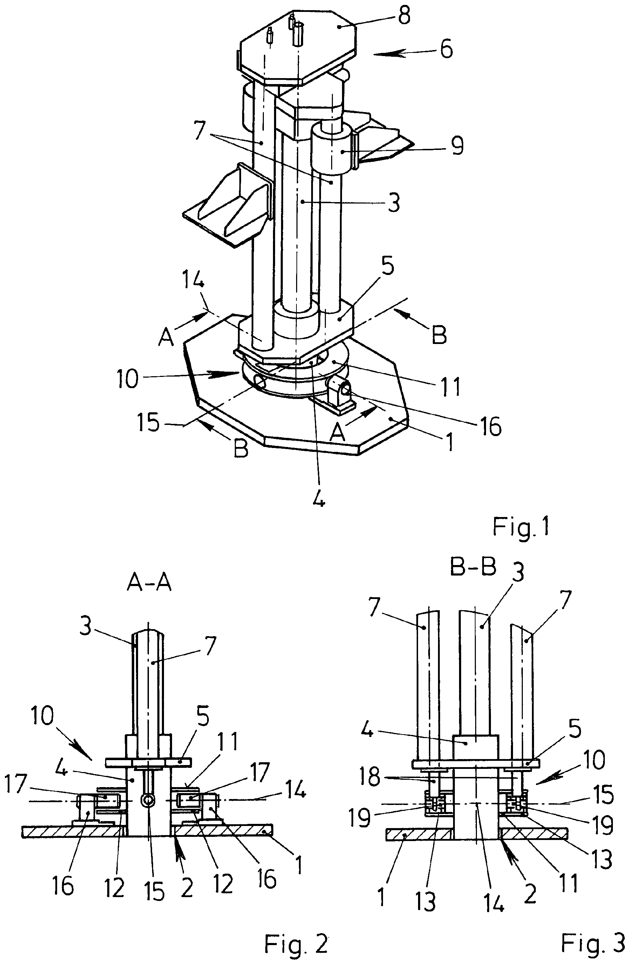

In der Fig. 1 ist der Deckel 1 eines so genannten Ofenkessels für eine VAR-Anlage gezeigt, in dem sich eine Kokille befindet. In dem Deckel 1 befindet sich eine Öffnung 2 (siehe Fig. 2 und 3), durch die hindurch eine Elektrodenstange 3 mit der daran befestigten Abschmelzelektrode 4 hindurchgeführt ist, so dass die Elektrodenstange 3 in die Kokille eintaucht, was hier nicht näher dargestellt ist.

Der Deckel 1 ist Teil des Gestells der Ofenanlage und damit ortsfest, so dass eine Elektrodenstangenhalterung 6 gegenüber dem Ofengestell bzw. gegenüber dem Deckel 1 allseitig verschwenkt werden kann.

Oberhalb des Deckels 1 befindet sich eine Tragplatte 5, von der ausgehend zwei Führungsstangen 7 senkrecht nach oben verlaufen, die mit ihrem oberen Ende an einer Traverse 8 enden.

Zwischen den Führungsstangen 7 befindet sich die Elektrodenstange 3. Sie wird durch eine entsprechende Hubvorrichtung 9, die hier nur schematisch dargestellt ist und nicht näher erläutert wird, zur Steuerung der Lichtbogeninduzierten Abschmelzung der Abschmelzelektrode in der Kokille gesenkt bzw. angehoben.

Wie außerdem aus den Fig. 2 und 3 hervorgeht, befindet sich zwischen der Tragplatte 5 und dem Deckel 1 eine kardanische Lagerung 10, die aus einem hohlen Kardanring 11 besteht. Im einfachsten Fall besteht der Kardanring 11 aus zwei im Abstand übereinander angeordneten Kreisringen, wobei ggf. eine innen und eine außen umlaufende Wand, den Raum zwischen den beiden Kreisringen schließen. In diesem Kardanring 11 befinden sich - um jeweils 90 Grad gegeneinander versetzt - vier Lagerringe 12, 13, die die beiden Kreisringe miteinander verbinden, wobei die jeweils gegenüberliegenden Lagerringe 12 bzw. 13 - koaxial zueinander - auseinander sind. Zwei gegenüberliegende Lagerringe 12 bzw. 13 bilden jeweils ein Paar. Das eine Paar Lagerringe 12 (siehe Fig. 2) dient dazu, eine gestellfeste Kardanachse 14 zu gestalten, während das andere Paar Lagerringe 13 (siehe Fig. 3) zu der Kardanachse 15 gehört, die gegenüber der Tragplatte 5 fixiert ist.

Bei den Lagerringen kann es sich um Lagerbuchsen für eine Gleitlagerung handeln.

Gemäß der Fig. 2 befindet sich in jedem Lagerring 12 der gestellfesten Kardanachse 14 eine Wägezelle 17, die als Lagerkern dient und auf der der jeweilige Lagerring 12 drehbar gelagert ist. Die Wägezellen 17 sind drehfest an Sockeln 16, die auf dem Deckel 1 befestigt sind, gehalten und stehen seitlich davon ab.

Die Wägezellen 17 sind von einer Art, die eine feste Messrichtung aufweisen, diese Messrichtung ist vertikal angeordnet, so dass die Wägezellen 17 unabhängig von einer Kippung der Elektrodenstangenhalterung 6 das Gewicht der Elektrodenstangenhalterung 6 und der Elektrodenstange 3 mit der daran angeschweißten Abschmelzelektrode 4 bestimmen. Daraus lässt sich laufend das sich während des Abschmelzvorganges ändernde Gewicht der Abschmelzelektrode 4 errechnen.

In der Fig. 3 ist die Anordnung der beiden Lagerringe 13 der tragplattenfesten Kardanachse 15 gezeigt. In diese tauchen radial von oben zwei Stützen 18 ein, die in den in den Lagerringen 13 gelagerten Bolzen 19 befestigt sind. Diese tragplattenfeste Kardanachse 15 bildet eine Querachse zur gestellfesten Kardanachse 14, so dass die Elektrodenstangenhalterung 6 allseitig gekippt werden kann.

Die beiden Kardanachsen 14, 15 verlaufen in eine Ebene, wodurch sich eine relativ geringe Bauhöhe der kardanische Lagerung 10 ergibt.

Die Erfindung wird bei einer ESU-Anlage in entsprechender Weise realisiert. Da diese Anlagen keine geschlossenen Kessel aufweisen, wird der Kardanring auf einem sich über der Kokille erstreckenden Gestell aufgebaut.

### Bezugszeichenliste

- 1: Deckel
- 2: Öffnung
- 3: Elektrodenstange
- 4: Abschmelzelektrode
- 5: Tragplatte

- 6: Elektrodenstangenhalterung
- 7: Führungsstangen
- 8: Traverse
- 9: Hubvorrichtung
- 10: kardanische Lagerung

- 11: Kardanring
- 12: Lagerringe
- 13: Lagerringe
- 14: Kardanachse
- 15: Kardanachse

- 16: Sockel
- 17: Wägezelle
- 18: Stützen
- 19: Bolzen

## Patentansprüche

1. Umschmelzofen mit einer in einem Grundgestell angeordneten Kokille, einer im Wesentlich senkrecht stehenden und über der Kokille angeordneten Elektrodenstange (3), an deren zur Kokille gerichteten Ende eine abschmelzbare Abschmelzelektrode (4) befestigbar ist, eine allseitig gegenüber dem Grundgestell verschwenkbare Elektrodenstangenhalterung (6) für die Elektrodenstange, um eine an der Elektrodenstange (3) befestigte Abschmelzelektrode (4) in der Kokille möglichst koaxial zur Kokillenmittelachse ausrichten zu können, wobei eine kardanische Lagerung (10) der Elektrodenstangenhalterung (6) mit zwei sich kreuzenden Kardanachsen (14, 15) vorgesehen ist, und mit einem Gewichtssensor zwischen dem Gestell und der Elektrodenstangenhalterung (6) zur Bestimmung des Gewichts einer an der Elektrodenstange (3) befestigten Abschmelzelektrode (4), **dadurch gekennzeichnet, dass** der Gewichtssensor in einer der Kardanachsen (14, 15) angeordnet ist.

2. Umschmelzofen nach Anspruch 1, **dadurch gekennzeichnet, dass** der Gewichtssensor aus mehreren Wägezellen (17) besteht und dass in den Achslagern der jeweiligen Kardanachse (14, 15) jeweils eine der Wägezellen (17) angeordnet ist.

3. Umschmelzofen nach Anspruch 2, **dadurch gekennzeichnet, dass** die Wägezellen (17) in der Kardanachse (14) angeordnet sind, deren räumliche Lage zum Grundgestell unveränderlich ist, und dass jede Wägezelle (17) jeweils nur eine Messrichtung aufweist, wobei die Ausrichtung der Messrichtung gegenüber dem Grundgestell fixiert ist.

4. Umschmelzofen nach Anspruch 3, **dadurch gekennzeichnet, dass** jede Wägezelle (17) mit einem Ende in oder an einem Sockel (16) befestigt ist und dass auf dem vom Sockel (16) abstehenden anderen Ende ein Lagerring (12) oder Lagerbuchse der Achslagerung drehbar gehalten ist.

5. Umschmelzofen nach Anspruch 4, **dadurch gekennzeichnet, dass** der Sockel (16) auf dem Deckel (1) eines Kessels zur Aufnahme der Kokille befestigt ist.

6. Umschmelzofen nach einem der vorhergehenden Ansprüche, **dadurch gekennzeichnet, dass** die kardanische Lagerung (10) aus einem Kardanring (11) besteht, in dem und auf dessen Umfang verteilt vier Lagerringe (12, 13) oder Lagerbuchsen angeordnet sind, deren Achsen senkrecht zur Kardanringachse verlaufen und von denen jeweils zwei koaxial zueinander angeordnet sind.

7. Umschmelzofen nach Anspruch 5, **dadurch gekennzeichnet, dass** der Kardanring (11) als Hohlring ausgeführt ist, der mit einer Kühlflüssigkeit versorgt ist.

8. Kardangelenk insbesondere für die verschwenkbare Elektrodenstangenhalterung (6) eines Umschmelzofens, welcher mit zwei sich kreuzenden Kardanachsen (14, 15) vorgesehen ist, **dadurch gekennzeichnet, dass** ein Gewichtssensor in einer der Kardanachsen (14, 15) angeordnet ist.

9. Kardangelenk, nach Anspruch 8, **dadurch gekennzeichnet, dass** der Gewichtssensor aus mehreren Wägezellen (17) besteht und dass in den Achslagern der jeweiligen Kardanachse jeweils eine der Wägezellen (17) angeordnet ist und dass jede Wägezelle (17) nur eine Messrichtung aufweist.

10. Kardangelenk, nach Anspruch 8 oder 9, **dadurch gekennzeichnet, dass** das Gelenk einen Kardanring (11) aufweist, in dem und auf dessen Umfang verteilt vier Lagerringe (12, 13) oder Lagerbuchsen angeordnet sind, deren Achsen senkrecht zur Kardanringachse verlaufen und von denen jeweils zwei koaxial zueinander angeordnet sind.

## Claims

1. A remelting furnace having a casting die disposed in a base frame, an electrode rod (3) standing essentially upright and disposed above the casting die, to the end of which facing the casting die a consumable electrode (4) may be attached, an electrode rod mounting (6) for the electrode rod pivotable in all directions relative to the base frame in order to be able to orient the consumable electrode (4) attached to the electrode rod (3) in the casting die as far as possible coaxially to the central axis of the casting die, wherein a global-mounted bearing (10) of the electrode rod mounting (6) is provided with two intersecting cardanic shafts (14, 15), and having a weight sensor between the frame and the electrode rod mounting (6) for determining the weight of a consumable electrode (4) attached to the electrode rod (3), **characterized in that** the weight sensor is disposed in one of the cardanic shafts (14, 15).

2. The remelting furnace according to Claim 1, **characterized in that** the weight sensor is comprised of a plurality of weighing cells (17) and **in that** one of the weighing cells (17) respectively is disposed in the shaft bearing of each of the cardanic shafts (14, 15).

3. The remelting furnace according to Claim 2, **characterized in that** the weighing cells (17) are disposed in the cardanic shaft (14) whose spatial position relative to the base frame is invariable and **in that** each weighing cell (17) has only one measurement direction, wherein the orientation of the measurement direction being fixed relative to the base frame.

4. The remelting furnace according to Claim 3, **characterized in that** each weighing cell (17) is fastened on one end in or on a pedestal (16) and **in that** a bearing ring (12) or bearing bush of the shaft bearing is rotationally held on the other end protruding from the pedestal (16).

5. The remelting furnace according to Claim 4, **characterized in that** the pedestal (16) is attached on the cover (1) of a tank for accommodating the casting die.

6. The remelting furnace according to one of the previous Claims, **characterized in that** the gimbal-mounted bearing (10) comprises a cardanic ring (11) in which and distributed along the circumference of which four bearing rings (12, 13) or bearing bushes are disposed whose axes run perpendicular to the axis of the cardanic ring, with respective groups of two of said bearing rings or bearing bushes being disposed coaxially to one another.

7. The remelting furnace according to Claim 5, **characterized in that** the cardanic ring (11) is a hollow ring that is supplied with a cooling liquid.

8. A universal joint, in particular for the pivotable electrode rod mounting (6) of a remelting furnace, that is provided with two intersecting cardanic shafts (14, 15), **characterized in that** a weight sensor is disposed in one of the cardanic shafts (14, 15).

9. The universal joint according to Claim 8, **characterized in that** the weight sensor is comprised of a plurality of weighing cells (17) and **in that** one of said weighing cells (17) respectively is disposed in the shaft bearing of each cardanic shaft and **in that** each weighing cell (17) has only one measuring direction.

10. The universal joint according to Claim 8 or 9, **characterized in that** the joint comprises a cardanic ring (11) in which and distributed along the circumference of which four bearing rings (12, 13) or bearing bushes are disposed whose axes r un perpendicular to the axis of the cardanic ring, with respective groups of two of said bearing rings being disposed coaxially to one another.

## Revendications

1. Four de fusion comportant une coquille disposée dans un châssis de base, une barre porte-électrode (3) disposée sensiblement à la verticale et au-dessus de la coquille, à l'extrémité tournée vers la coquille de laquelle peut être fixée une électrode de fusion fusible (4), un support de barre porte-électrode (6) pivotable de tous côtés par rapport au châssis de base pour à barre porte-électrode pour pouvoir orienter une électrode de fusion (4) fixée à la barre porte-électrode (3) dans la coquille autant que possible coaxialement par rapport à l'axe central de la coquille, un support cardanique (10) du support de barre porte-électrode (6) comportant deux axes de cardan se croisant (14, 15) étant prévu, et un capteur de poids entre le châssis et le support de barre porte-électrode (6) pour déterminer le poids d'une électrode de fusion (4) fixée à la barre porte-électrode (3), **caractérisé en ce que** le capteur de poids est disposé dans un des axes de cardan (14, 15).

2. Four de fusion selon la revendication 1, **caractérisé en ce que** le capteur de poids est composé de plusieurs cellules de pesage (17) et que respectivement une des cellules de pesage (17) est disposée dans les paliers d'axe de l'axe de cardan respectif (14, 15).

3. Four de fusion selon la revendication 2, **caractérisé en ce que** les cellules de pesage (17) sont disposées dans l'axe de cardan (14) dont la position spatiale est invariable par rapport au châssis de base et que chaque cellule de pesage (17) présente respectivement un seul sens de mesure,
l'orientation du sens de mesure par rapport au châssis de base étant fixe.

4. Four de fusion selon la revendication 3, **caractérisé en ce que** chaque cellule de pesage (17) est fixé par une extrémité dans ou à un socle (16) et que, à l'autre extrémité dépassant du socle (16), un anneau support (12) ou une douille support du support d'axe est maintenu en rotation.

5. Four de fusion selon la revendication 4, **caractérisé en ce que** le socle (16) est fixé sur le couvercle (1) d'une chaudière destinée à recevoir la coquille.

6. Four de fusion selon une des revendications précédentes, **caractérisé en ce que** le support cardanique (10) est composé d'un anneau cardanique (11) dans lequel sont disposés, répartis dans et sur sa circonférence, quatre anneaux supports (12, 13) ou douilles supports dont les axes s'étendent perpendiculairement à l'axe de l'anneau cardanique et dont respectivement deux sont disposés coaxialement l'un par rapport à l'autre.

7. Four de fusion selon la revendication 5, **caractérisé en ce que** l'anneau cardanique (11) set réalisé sous forme d'un anneau creux qui est alimenté avec un liquide de refroidissement.

8. Articulation de cardan, en particulier pour le support pivotable d'une barre porte-électrode (6) d'un four à fusion qui est prévu avec deux axes de cardan se croisant (14, 15), **caractérisé en ce qu'**un capteur de poids est disposé dans un des axes de cardan (14, 15).

9. Articulation de cardan selon la revendication 8, **caractérisé en ce que** le capteur de poids est composé de plusieurs cellules de pesage (17) et qu'une des cellules de pesage (17) est respectivement disposée dans les paliers d'axe de l'axe de cardan respectif et que chaque cellule de pesage (17) présente un seul sens de mesure.

10. Articulation de cardan selon la revendication 8 ou 9, **caractérisé en ce que** l'articulation présente un anneau de cardan (11) dans lequel sont disposés répartis sur sa circonférence quatre anneaux supports (12, 13) ou douilles supports dont les axes s'étendent perpendiculairement à l'axe de l'anneau de cardan et dont respectivement deux sont disposés coaxialement l'un par rapport à l'autre.
